(19) Europäisches Patentamt
European Patent Office
Office européen des brevets

(11) Veröffentlichungsnummer: **0 002 756**
**B1**

(12) # EUROPÄISCHE PATENTSCHRIFT

(45) Veröffentlichungstag der Patentschrift: **27.10.82**

(51) Int. Cl.³: **C 08 K 5/34,** C 08 L 27/06, C 08 L 23/28

(21) Anmeldenummer: **78101725.6**

(22) Anmeldetag: **16.12.78**

(54) **Verwendung von Tetrazolen als Stabilisatoren für chlorhaltige Thermoplaste und dadurch erhaltene stabilisierte Formmassen.**

(30) Priorität: **29.12.77 CH 16182/77**

(43) Veröffentlichungstag der Anmeldung: **11.07.79 Patentblatt 79/14**

(45) Bekanntmachung des Hinweises auf die Patenterteilung: **27.10.82 Patentblatt 82/43**

(84) Benannte Vertragsstaaten: **DE FR GB**

(56) Entgegenhaltungen:
**DE-A-1 803 605**
**DE-A-1 926 547**
**DE-B-1 131 692**
**US-A-3 755 200**

(73) Patentinhaber: **CIBA-GEIGY AG, Patentabteilung Postfach, CH-4002 Basel (CH)**

(72) Erfinder: **Abeler, Gerd, Dr., Wilhelm-Leuschner-Strasse 235, D-6103 Griesheim über Darmstadt (DE)**
Erfinder: **Schneider, Rainer, Dr., Grafenstrasse 8, D-6140 Bensheim-Auerbach (DE)**

**EP 0 002 756 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verwendung von Tetrazolen als Stabilisatoren für chlorhaltige Thermoplaste und dadurch erhaltene stabilisierte Formmassen

Die vorliegende Erfindung betrifft die Stabilisierung von chlorhaltigen Thermoplasten durch Zusatz einer Tetrazolverbindung in Kombination mit einem Costabilisator.

Es ist bekannt, daß chlorhaltige Polymerisate gegen den schädigenden Einfluß von Licht und Wärme, z. B. bei der Verarbeitung zu Formteilen, geschützt werden müssen. Es ist auch bekannt, hierfür 5-Aminotetrazol und dessen Derivate, z. B. Salze oder Carbonsäureamide, zu verwenden (vgl. DE-AS 1 134 197). Die mit diesem Wirkstoff erzielten Stabilitäten sind jedoch für die Praxis nicht ausreichend und es besteht ein Bedürfnis, hier Verbesserungen aufzufinden.

In der deutschen Offenlegungsschrift 1 926 547 ist die Stabilisierung von halogenfreien Polyoolefinen in Gegenwart von Kupfer mit Triazolen, die eine exocyclische NH-Gruppe enthalten, beschrieben. Ferner ist aus dem amerikanischen Patent 3 755 200 bekannt, Metallcarboxylate oder Epoxidverbindungen als Stabilisatoren für Vinylchloridpolymere zu verwenden.

Es wurde nun gefunden, daß bestimmte Mono- oder Bistetrazole eine gute Stabilisierung von chlorhaltigen Thermoplasten bewirken, diese Wirkung aber durch bestimmte Cokatalysatoren noch beträchtlich gesteigert werden kann. Als Costabilisatoren können Epoxidweichmacher oder Metallstabilisatoren verwendet werden.

Ein Gegenstand vorliegender Erfindung ist die Verwendung eines Mono- oder Bistetrazols der Formel I

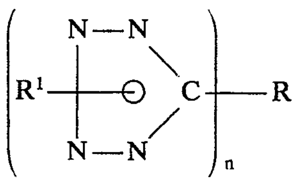

(I)

worin $R^1$ ein Wasserstoffatom, $C_1-C_4$-Alkyl, $C_5$- oder $C_6$-Cycloalkyl, Phenyl oder durch $C_1-C_4$-Alkyl oder Halogen substituiertes Phenyl bedeutet, n die Zahlen 1 oder 2 bedeutet und wenn n die Zahl 1 bedeutet, R $C_1-C_{20}$-Alkyl, das durch O, $-NY-$, S, $SO_2$ und/oder $CO_2$ unterbrochen oder durch $-OH$ oder $-SH$ substituiert sein kann, Phenyl oder Benzyl, das durch $C_1-C_4$-Alkyl substituiert sein kann oder $C_5$- oder $C_6$-Cycloalkyl darstellt, und wenn die Zahl 2 bedeutet, R eine direkte Bindung, Alkylen mit 1 bis 10 C-Atomen, das durch Phenyl, Benzyl, Hydroxy, $C_1-C_4$-Alkoxy, $C_1-C_{20}$-Acyloxy, Phenylsulfonyl oder Alkylsulfonyl substituiert oder durch O, S, $SO_2$, $CO_2$ oder $-NY-$ unterbrochen sein kann, oder $C_2-C_{10}$-Alkyliden, Phenylen, Benzylen oder Xylylen darstellt, wobei Y Wasserstoff, $C_1-C_4$-Alkyl, Phenyl, Benzyl, Naphthyl, Cyclohexyl oder $C_1-C_{20}$-Acyl bedeutet, als Stabilisator gegen den thermischen und photochemischen Abbau von Homo- oder Copolymerisaten des Vinylchlorids oder von nach-chlorierten Polyolefinen in Kombination mit einem Epoxidweichmacher und/oder mindestens einem Carboxylat oder Phenolat der Metalle Barium, Cadmium, Zink oder Calcium.

Gegenstand der Erfindung ist auch eine Formmasse auf Basis eines Homo- oder Copolymeren des Vinylchlorids oder eines nach-chlorierten Polyolefins, die dadurch gekennzeichnet ist, daß sie folgende Stabilisatoren enthält:

a) 0,05 bis 5 Gew.-% eines Mono- oder Bistetrazols der Formel I des Anspruchs
b) mindestens 0,05 Gew.-% eines Epoxidweichmachers und/oder 0,05 bis 5 Gew.-% mindestens eines Carboxylates oder Phenolats von Barium, Calcium, Zink oder Cadmium, jeweils bezogen auf den chlorhaltigen Thermoplast.

Wenn $R^1$ $C_1-C_4$-Alkyl ist, so kann es sich um Methyl, Äthyl, Propyl, iso-Propyl, Butyl oder iso-Butyl handeln. $R^1$ in seiner Bedeutung als $C_5$- oder $C_6$-Cycloalkyl kann Cyclopentyl oder Cyclohexyl sein. Als substituiertes Phenyl kann $R^1$ beispielsweise Tolyl, Xylyl, oder 3-Chlorphenyl sein. Bevorzugt ist $R^1$ $C_1-C_4$-Alkyl, Phenyl und insbesondere ein Wasserstoffatom.

Wenn $n=1$ ist, kann R gegebenenfalls unterbrochenes bzw. substituiertes $C_1$ bis $C_{20}$-, vorzugsweise $C_1$ bis $C_{12}$-, besonders $C_1$ bis $C_8$- und insbesondere $C_1$ bis $C_6$-Alkyl sein, das linear oder verzweigt ist. In seiner Bedeutung als Alkyl kann R beispielsweise Methyl, Äthyl, Propyl, iso-Propyl, Butyl, Pentyl, Hexyl, 2-Äthylhexyl, Octyl, Dodecyl, Hexadecyl, Octadecyl oder Eicosyl sein.

Wenn R durch O, $-NY-$, S, $SO_2$ und/oder $CO_2$, bevorzugt O, S und/oder $CO_2$ unterbrochenes, oder durch OH oder SH substituiertes Alkyl darstellt, kann es beispielsweise sein:

Alkoxyalkyl, Alkylthiaalkyl, Alkyloxycarbonylalkyl, Alkylcarbonyloxyalkyl oder Alkylsulfonylalkyl, Hydroxyalkyl, Mercaptoalkyl, wie Methoxyäthyl, Äthoxymethyl, Propoxypropyl, Butoxyäthyl, Octoxyäthyl, Octadecyloxyäthyl, Methylthioäthyl, Hexylthioäthyl, Propylsulfonyläthyl, Dimethylaminoäthyl, Diäthylaminomethyl, Methoxycarbonylmethyl, Dodecyloxycarbonyläthyl, Äthylcarbonyloxyäthyl, Hydroxyäthyl, Hydroxypropyl, Hydroxybutyl, Hydroxyhexyl und entsprechendes

SH-gruppenhaltiges Alkyl. Bevorzugt sind hier β-Alkoxy-, Alkylthio-, Mercapto- oder Hydroxyalkyl.

R in seiner Bedeutung als $C_5$- oder $C_6$-Cycloalkyl kann Cyclopentyl oder Cyclohexyl sein, und in seiner Bedeutung als $C_1$ bis $C_4$-Alkyl substituiertes Phenyl oder Benzyl kann es Toluyl, Äthylphenyl, Methylbenzyl oder Butylbenzyl sein.

Wenn n = 2 ist, dann kann R in Formel I gegebenenfalls substituiertes oder unterbrochenes Alkylen sein, das bevorzugt 1 bis 8, besonders 1 bis 6 C-Atome enthält und linear oder verzweigt sein kann. Beispiele für lineares und verzweigtes Alkylen sind Methylen, Äthylen, 1,2- oder 1,3-Propylen, 1,2-, 1,3- oder 1,4-Butylen, 1,5-Pentylen, Neopentylen, 1,5-Hexylen, 1,4-Heptylen, 1,2- oder 1,6-Octylen, 1,2- oder 1,10-Decylen.

R in seiner Bedeutung als substituiertes Alkylen ist bevorzugt durch Phenyl, Hydroxy oder $C_1$ bis $C_{18}$-Acyloxy substituiert. Beispiele für substituiertes Alkylen sind 2-Phenyl-1,3-propylen, 1,2-Diphenyläthylen, Benzylmethylen, 2-Hydroxy-1,3-propylen, 3-Formyloxypentylen, 2-Propionyloxy-1,3-propylen, 2-Octadecyloxy-1,3-propylen, 2-Methoxy-1,3-propylen, 3-Phenyl-3-phenylsulfonyl-1,5-pentylen. Sofern das Alkylen durch Alkylsulfonyl substituiert ist, enthält dieses bevorzugt 1 bis 4 C-Atome.

R in seiner Bedeutung als Alkylen kann auch durch O, S, $SO_2$, $CO_2$ oder $-NY-$ unterbrochen sein, bevorzugt durch O, S oder NY. Y ist bevorzugt ein Wasserstoffatom, $C_1$ bis $C_4$-Alkyl, Phenyl oder $C_1$ bis $C_{18}$-Acyl. Beispiele sind Reste der Formel

$$-(CH_2)_m-X-(CH_2)_m-$$

worin X = O, S, $SO_2$, $CO_2$ oder NY ist und m eine Zahl von 1 bis 6, bevorzugt 1 oder 2. Y kann als Alkyl Methyl, Äthyl, Propyl oder Butyl und als Acyl Acetyl, Propionyl, Hexanoyl, Benzoyl, Oleoyl, Lauroyl sein.

Wenn n = 2 ist, kann R auch $C_2-C_{10}$-, vorzugsweise $C_2-C_8$-, besonders $C_2-C_6$-Alkyliden sein. Beispiele sind Äthyliden 1,1- oder 2,2-Propyliden, 1,1- oder 2,2-Butyliden, 1,1-, 2,2- oder 3,3-Pentyliden, Hexyliden, Octyliden, Decyliden.

Wenn n = 2 ist, kann R auch Phenylen, Benzylen oder Xylylen sein. Bevorzugt sind hier die zweiwertigen Meta- oder Parareste, z. B. m- oder p-Phenylen oder -Xylylen.

Eine bevorzugte Untergruppe der Mono- oder Bistetrazole der Formel I sind jene, in denen n = 1 ist und R $C_1-C_6$-Alkyl oder -Hydroxyalkyl darstellt, oder n = 2 ist und R $C_2-C_6$-Alkylen, das durch O oder S unterbrochen oder durch Hydroxyl substituiert sein kann, Phenylen, Benzylen oder Xylylen bedeutet.

Eine besonders bevorzugte Gruppe der Bistetrazole der Formel I sind jene, in denen n = 2 ist, $R^1$ ein Wasserstoffatom und $R^2$ $C_2$ bis $C_4$-Alkylen oder 3-Thiapentylen ist.

Die Mono- und Bistetrazole der Formel I sind bekannt oder analog den in der DE-OS 2 731 323 oder in J. Amer. Chem. Soc. 80, 3908 (1958) beschriebenen Verfahren durch die Umsetzung von Mononitrilen der Formel R – CN oder Dinitrilen der Formel $R(CN_2)$ mit Stickstoffwasserstoffsäure (oder deren Salzen im sauren Reaktionsmedium) erhältlich.

Verbindungen in welchen in Formel I $R^1$ nicht ein Wasserstoffatom ist, werden erhalten durch die Reaktion von Carbonsäureamiden der Formel $R-(CO-NH-R^1)_y$ (mit y = 1 oder 2) mit $PCl_5$ oder $SOCl_2$ und anschließender Umsetzung der erhaltenen Imidchloride mit Alkaliazid, wie es in Chem. Ber. 42, (1909) 2336 und 74, (1941), 264 beschrieben ist.

Die Mono- und Bistetrazole der Formel I werden den zu stabilisierenden chlorhaltigen Thermoplasten vor der Verarbeitung in üblichen Einrichtungen im allgemeinen in Mengen von 0,05 bis 5, vorzugsweise 0,1 bis 3 Gew.-% einverleibt, bezogen auf den chlorhaltigen Thermoplasten. Sie wirken bereits selbst stabilisierend; die Wirkung reicht jedoch für die Praxis oft nicht aus. Zusammen mit epoxidgruppenhaltigen Weichmachern wird aber überraschend eine synergistische Wirkung gefunden, die einen breiten Einsatz in der Praxis ermöglicht.

Die Weichmacher können in Mengen verwendet werden, wie sie zur Einstellung gewünschter Eigenschaften in weichgemachten chlorhaltigen Thermoplasten notwendig sind. Bei der Verwendung nur als Costabilisator werden sie im allgemeinen in Mengen von mindestens 0,05 Gew.-%, vorzugsweise 0,05 bis 10, insbesondere 0,1 bis 5 Gew.-% eingesetzt, bezogen auf den chlorhaltigen Thermoplasten. Es hat sich als vorteilhaft erwiesen, die Mono- und Bistetrazole der Formel I und den Epoxidgruppen enthaltenen Weichmacher im Verhältnis von etwa 1 : 0,5 bis 1 : 10, vorzugsweise 1 : 1 bis 1 : 8 einzusetzen.

Von den epoxidgruppenhaltigen Weichmachern werden die Ester olefinisch ungesättigter Säuren mit ein- oder mehrwertigen Alkoholen bevorzugt, deren Doppelbindungen epoxidiert wurden. Die Säuren enthalten bevorzugt 12 bis 22 C-Atome und die Alkohole 1 bis 30, besonders 1 bis 20 C-Atome. Bevorzugte Säuren sind besonders Ölsäure sowie Elaidinsäure oder Linolsäure. Beispiele sind epoxidiertes Butyl- oder Octyloleat, besonders aber epoxidiertes Sojabohnenöl.

Überraschend können auch Metallstabilisatoren von Barium, Calcium, Zink und Cadmium als synergistisch wirkende Costabilisatoren verwendet werden, wobei bevorzugt 0,05 bis 5, besonders 0,1 bis 3 Gew.-% eingearbeitet werden. Das Verhältnis von Tetrazol und Metallstabilisator kann hierbei etwa 2 : 1 bis 1 : 8 betragen.

Geeignete Metallstabilisatoren sind die Carboxylate oder Phenolate der Metalle Barium, Calzium, Zink oder Cadmium. Die Phenole können 6 bis 20 C-Atome aufweisen und die Carbonsäuren bevorzugt 8 bis 20 C-Atome. Besonders günstig sind Mischungen von Barium- und Cadmium- oder Calcium- und Zinksalzen.

Für die erfindungsgemäßen Formmassen werden bevorzugt Vinylchloridpolymere oder -copolymere verwendet. Bevorzugt sind Suspensions(S-PVC)- und Massepolymere und ausgewaschene, also emulgatorarme Emulsionspolymere. Als Comonomere für die Copolymerisate kommen z. B. in Frage: Vinylidenchlorid, Transdichloräthen, Äthylen, Propylen, Butylen, Maleinsäure, Acrylsäure, Fumarsäure, Itaconsäure. Weitere geeignete chlorhaltige Polymere sind nachchlorierte Polyolefine.

Die Herstellung der erfindungsgemäß stabilisierten Thermoplaste erfolgt nach bekannten Verfahren durch Einarbeiten der Stabilisatoren und gegebenenfalls weiterer Stabilisatoren in das Polymerisat. Eine homogene Mischung von Stabilisator und PVC kann z. B. mit Hilfe eines Zweiwalzenmischers bei 150 – 210° C erzielt werden. Je nach dem Verwendungszweck der Formmasse können vor oder mit der Einarbeitung des Stabilisators auch weitere Zusätze eingearbeitet werden, wie z. B. Gleitmittel (bevorzugt Montanwachse oder Glycerinester), Weichmacher, Füllstoffe, Modifikatoren (wie etwa Schlagzäh-Zusätze), Pigmente, Lichtstabilisatoren, UV-Absorber, Antioxidantien oder weitere Costabilisatoren wie z. B. Phosphite. Die erfindungsgemäßen Thermoplaste können nach den dafür gebräuchlichen Formgebungsverfahren z. B. durch Extrusion, Spritzgießen oder Kalandrieren zu Formteilen verarbeitet werden. Auch die Verwendung als Plastisole ist möglich.

Die Thermostabilisierung mit den erfindungsgemäß verwendeten Stabilisatoren ist in den erfindungsgemäßen Thermoplasten hervorragend und zumindest vergleichbar oder besser als die der bekannten guten S-haltigen Aminocrotonate. Auch die Lichtstabilität ist hervorragend.

Die nachfolgenden Beispiele dienen der näheren Erläuterung der Erfindung. Teile sind hierin Gewichtsteile und Prozente Gewichts-Prozente.

## Beispiel 1

Die Grundrezeptur ist ein Dryblend, bestehend aus 100 Teilen S-PVC (K-Wert 64), 20 Teilen Dioctylphthalat, 4 Teilen epoxidiertem Sojabohnenöl (Reoplast 39) und 0,5 Teilen Phosphitstabilisator (Irgastab CH 300). Hierzu werden 1,5 Teile Tetrazolstabilisator auf einem Mischwalzwerk 5 Minuten bei 170° C eingemischt und eine Walzfolie von 0,3 mm Dicke hergestellt.

Von der Folie werden Proben entnommen und in einem Ofen bei 180° C thermisch belastet. Alle 15 Minuten wird an einer Probe der Yellowness-Index nach ASTM D 1925-70 bestimmt.

Die Ergebnisse sind in Tabelle 1 zusammengefaßt.

Tabelle 1

| Tetrazol | Yellowness-Index nach Alterung bei 180° C Zeit (in Min.) | 15 | 30 | 45 | 60 | 75 | 90 |
|---|---|---|---|---|---|---|---|
| Grundrezeptur | 13 | 82 | > 100 | | | | |
| T—$(CH_2)_2$—$NC_6H_5$—$(CH_2)_2$—T*) | 6 | 20 | 34 | 61 | 83 | > 100 | |
| T—$(CH_2)_2$—O—$(CH_2)_2$—T | 4 | 9 | 27 | 85 | > 100 | | |
| T—$CH_2$—O—$CH_2$—T | 5 | 22 | 62 | 100 | | | |
| T—$CH_2$—$CHOHCH_2$—T | 5 | 23 | 46 | 57 | > 100 | | |
| 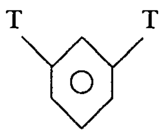 | 6 | 39 | 57 | 72 | 86 | 95 | > 100 |
| T—$(CH_2)_3$—T | 4 | 7 | 15 | 21 | 27 | | |
| T—$(CH_2)_2$—S—$(CH_2)_2$—T | 4 | 11 | 33 | 65 | | | |
| T—$(CH_2)_4$—T | 5 | 16 | 21 | 31 | | | |
| T—$CH_2CH_2$—OH | 3 | 14 | 37 | 85 | > 100 | | |

*) T = 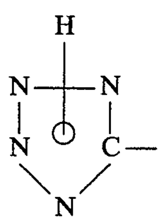

## Beispiel 2

Ein Dryblend, bestehend aus 100 Teilen S-PVC (K-Wert 64), 0,2 Teilen Montanwachs, 1,0 Teilen Glycerinmonofettsäureester und 2,0 Teilen epoxidiertes Sojabohnenöl (Reoplast 39) wird mit 1,5 Teilen Tetrazolstabilisator auf einem Mischwalzwerk 5 Minuten bei 170° C gewalzt und danach Testfolien von 0,3 mm Dicke entnommen.

Die Folienproben werden in einem Ofen bei 180° C thermisch belastet und alle 3 Minuten an einer Probe der Yellowness-Index (YI) nach ASTM D 1925-70 bestimmt.

Als Vergleich werden aus demselben Dryblend Walzfolien mit Thiodiäthylenglykol-bis-$\beta$-aminocrotonat als Stabilisator hergestellt.

Die Ergebnisse sind in Tabelle 2 dargestellt.

Tabelle 2

| Stabilisator | Yellowness-Index nach (Min.) | | | | | | | | | | | | | |
|---|---|---|---|---|---|---|---|---|---|---|---|---|---|---|
| | 3 | 6 | 9 | 12 | 15 | 18 | 21 | 24 | 27 | 30 | 33 | 36 | 39 | 42 |
| Vergleich | 8 | 13 | 19 | 26 | 31 | 37 | 43 | 47 | 54 | 62 | | | | |
| $T-(CH_2)_4-T$*) | 14 | 15 | 18 | 21 | 26 | 28 | 30 | 34 | 37 | 41 | 43 | 46 | 50 | 59 |

*) T = 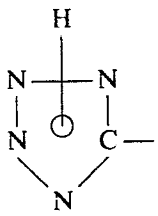

Beispiel 3

Die Grundrezeptur ist ein Dryblend aus 100 Teilen S-PVC (K-Wert 64), 20 Teilen Dioctylphthalat und 1,5 Teilen Ca/Zn-Stearat. Diese wird wie in Beispiel 1 beschrieben mit 1,0 Teil Tetrazolstabilisator gemischt zu Folien von 0,3 mm Dicke verarbeitet und diese wie in Beispiel 1 getestet.

Die Ergebnisse sind in Tabelle 3 dargestellt.

Tabelle 3

| Stabilisator | Yellowness-Index | Zeit (Min.) 15 | 30 | 45 | 60 | 75 | 90 |
|---|---|---|---|---|---|---|---|
| Grundrezeptur | 10 | >100 | | | | | |
| $T-(CH_2)_4-T$*) | 6 | 23 | 48 | 86 | >100 | | |
| $T-(CH_2)_2-S-(CH_2)_2-T$ | 13 | 15 | 24 | 36 | 69 | 97 | >100 |
| $T-(CH_2)_3-T$ | 6 | 10 | 27 | 65 | 100 | | |

*) T = 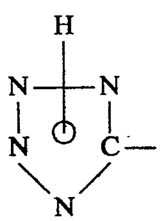

**Patentansprüche**

1. Verwendung eines Mono- oder Bistetrazols der Formel I

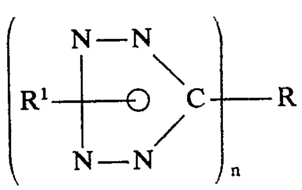

(I)

worin $R^1$ ein Wasserstoffatom, $C_1-C_4$-Alkyl, $C_5$- oder $C_6$-Cycloalkyl, Phenyl oder durch $C_1-C_4$-Alkyl oder Halogen substituiertes Phenyl bedeutet, n die Zahlen 1 oder 2 bedeutet und wenn n die Zahl 1 bedeutet, R $C_1-C_{20}$-Alkyl, das durch O, $-NY-$, S, $SO_2$ und/oder $CO_2$ unterbrochen oder durch $-OH$

oder $-SH$ substituiert sein kann, Phenyl oder Benzyl, das durch $C_1-C_4$-Alkyl substituiert sein kann oder $C_5$- oder $C_6$-Cycloalkyl darstellt, und wenn die Zahl 2 bedeutet, R eine direkte Bindung, Alkylen mit 1 bis 10 C-Atomen, das durch Phenyl, Benzyl, Hydroxy, $C_1-C_4$-Alkoxy, $C_1-C_{20}$-Acyloxy, Phenylsulfonyl oder Alkylsulfonyl substituiert oder durch O, S, $SO_2$, $CO_2$ oder $-NY-$ unterbrochen sein kann, oder $C_2-C_{10}$-Alkyliden, Phenylen, Benzylen oder Xylylen darstellt, wobei Y Wasserstoff, $C_1-C_4$-Alkyl, Phenyl, Benzyl, Naphthyl, Cyclohexyl oder $C_1-C_{20}$-Acyl bedeutet, als Stabilisator gegen den thermischen und photochemischen Abbau von Homo- oder Copolymerisaten des Vinylchlorids oder von nach-chlorierten Polyolefinen in Kombination mit einem Epoxidweichmacher und/oder mindestens einem Carboxylat oder Phenolat der Metalle Barium, Cadmium, Zink oder Calcium.

2. Verwendung gemäß Anspruch 1, dadurch gekennzeichnet, daß $R^1$ ein Wasserstoffatom ist.

3. Verwendung gemäß Anspruch 1, dadurch gekennzeichnet, daß R für $n=1$ $C_1-C_6$-Alkyl oder Hydroxyalkyl, für $n=2$ $C_2-C_6$-Alkylen, das durch O oder S unterbrochen oder durch Hydroxyl substituiert sein kann, Phenylen, Benzylen oder Xylylen bedeutet.

4. Verwendung gemäß Anspruch 2, dadurch gekennzeichnet, daß in Formel I $n=2$, $R^1$ ein Wasserstoffatom und $R^2$ $C_2-C_4$-Alkylen oder 3-Thiapentylen ist.

5. Verwendung gemäß Anspruch 1, dadurch gekennzeichnet, daß der Epoxidweichmacher epoxidiertes Sojabohnenöl ist.

6. Verwendung gemäß Anspruch 1, dadurch gekennzeichnet, daß als Metallsalz eine Kombination von Barium- und Cadmium- oder Calcium- und Zinksalzen verwendet wird.

7. Formmasse auf Basis eines Homo- oder Copolymeren des Vinylchlorids oder eines nach-chlorierten Polyolefins, dadurch gekennzeichnet, daß sie folgende Stabilisatoren enthält:

a) 0,05 bis 5 Gew.-% eines Mono- oder Bistetrazols der Formel I des Anspruchs 1
b) mindestens 0,05 Gew.-% eines Epoxidweichmachers und/oder 0,05 bis 5 Gew.-% mindestens eines Carboxylates oder Phenolates von Barium, Calcium, Zink oder Cadmium, jeweils bezogen auf den chlorhaltigen Thermoplast.

## Claims

1. Utilisation of a mono- or bistetrazole of the formula I

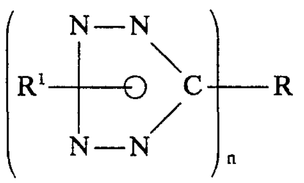

(I)

wherein $R^1$ represents a hydrogen atom, alkyl of 1 to 4 carbon atoms, cycloalkyl of 5 or 6 carbon atoms, phenyl, or phenyl which is substituted by alkyl of 1 to 4 carbon atoms or halogen, n is 1 or 2, and, when n is 1, R represents alkyl of 1 to 20 carbon atoms which can be interrupted by oxygen, $-NY-$, sulfur, $SO_2$ and/or $CO_2$, or substituted by $-OH$ or $-SH$, or represents phenyl or benzyl which can be substituted by alkyl of 1 to 4 carbon atoms, or is cycloalkyl of 5 or 6 carbon atoms, and, when n is 2, R represents a direct bond, alkylene of 1 to 10 carbon atoms which can be substituted by phenyl, benzyl, hydroxyl, alkoxy of 1 to 4 carbon atoms, acyloxy of 1 to 20 carbon atoms, phenylsulfonyl or alkylsulfonyl, or interrupted by oxygen, sulfur, $SO_2$, $CO_2$ or $-NY-$, or represents alkylidene of 1 to 10 carbon atoms, phenylene, benzylene or xylylene, and Y represents hydrogen, alkyl of 1 to 4 carbon atoms, phenyl, benzyl, naphthyl, cyclohexyl or acyl of 1 to 20 carbon atoms, as stabiliser for preventing the thermal and photochemical degradation of homopolymers or copolymers of vinyl chloride, or of post-chlorinated polyolefins in combination with an epoxy plasticiser and/or at least one carboxylate or phenolate of barium, cadmium, zinc or calcium.

2. Utilisation according to claim 1, wherein $R^1$ in formula I is a hydrogen atom.

3. Utilisation according to claim 1, wherein, when n is 1, R represents alkyl of 1 to 6 carbon atoms or hydroxyalkyl, and, when n is 2, represents alkylene of 2 to 6 carbon atoms which can be interrupted by oxygen or sulfur or substituted by hydroxyl, or represents phenylene, benzylene of xylylene.

4. Utilisation according to claim 2, wherein, when n is 2 in formula I, $R^1$ represents a hydrogen atom and $R^2$ represents alkylene of 2 to 4 carbon atoms or 3-thiapentylene.

5. Utilisation according to claim 1, wherein the epoxy plasticiser is epoxidised soya bean oil.

6. Utilisation according to claim 1, wherein a combination of barium and cadmium salts or calcium and zinc salts is used as metal salt.

7. A moulding composition based on a homopolymer or copolymer of vinyl chloride or on a post-chlorinated polyolefin, which moulding composition contains the following stabilisers:

a) 0.05 to 5% by weight of a mono- or bistetrazole of the formula I according to claim 1,
b) at least 0.05% by weight of an epoxy plasticiser and/or 0.05 to 5% by weight of at least one carboxylate or phenolate of barium, calcium, zinc or cadmium, in each case based on the chlorinated thermoplastic.

**Revendications**

1. Application d'un mono- ou bis-tétrazole répondant à la formule (I):

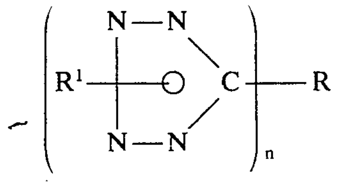

(I)

dans laquelle:
$R^1$ représente un atome d'hydrogène, un alkyle en $C_1-C_4$, un cycloalkyle en $C_5$ ou $C_6$, un phényle ou un phényle porteur d'un alkyle en $C_1-C_4$ ou d'un halogène,
n désigne l'un des nombres 1 et 2, et
R représente:

– lorsque n est égal à 1, un alkyle en $C_1-C_{20}$ éventuellement interrompu par O, $-NY-$, S, $SO_2$ et/ou $CO_2$ ou porteur d'un groupe $-OH$ ou $-SH$, un phényle ou un benzyle éventuellement porteur d'un alkyle en $C_1-C_4$, ou un cycloalkyle en $C_5$ ou $C_6$, et
– lorsque n est égal à 2, une liaison directe, un alkylène en $C_1-C_{10}$ éventuellement porteur d'un phényle, d'un benzyle, d'un hydroxy, d'un alcoxy en $C_1-C_4$, d'un acyloxy en $C_1-C_{20}$, d'un phénylsulfonyle ou d'un alkylsulfonyle ou interrompu par O, S, $SO_2$ ou $-NY-$, ou représente un alkylidène en $C_2-C_{10}$, un phénylène, un benzylène ou un xylylène, le symbole Y désignant l'hydrogène, un alkyle en $C_1-C_4$, un phényle, un benzyle, un naphtyle, un cyclohexyle ou un acyle en $C_1-C_{20}$,

comme stabilisant contre la dégradation thermique et photochimique d'homopolymères ou de copolymères du chlorure de vinyle ou de polyoléfines chlorées ultérieurement, en association avec un plastifiant époxydique et/ou au moins un carboxylate ou un phénolate de baryum, de cadmium, de zinc ou de calcium.

2. Application selon la revendication 1, caractérisée en ce que $R^1$ désigne un atome d'hydrogène.

3. Application selon la revendication 1, caractérisée en ce que R, dans le cas où n est égal à 1, représente un alkyle ou un hydroxyalkyle en $C_1-C_6$, et, dans le cas où n est égal à 2, un alkylène en $C_2-C_6$ éventuellement interrompu par O ou S ou éventuellement porteur d'un hydroxy, un phénylène, un benzylène ou un xylylène.

4. Application selon la revendication 2, caractérisée en ce que, dans la formule (I), n est égal à 2, $R^1$ représente un atome d'hydrogène et $R^2$ représente un alkylène en $C_2-C_4$ ou un thia-3 pentylène.

5. Application selon la revendication 1, caractérisée en ce que le plastifiant époxydique est une huile de soja époxydée.

6. Application selon la revendication 1, caractérisée en ce qu'on utilise, comme sel métallique, une association de sels de baryum ou de cadmium, ou de sels de calcium et de zinc.

7. Matière à mouler à base d'un homopolymère ou d'un copolymère du chlorure de vinyle ou d'une polyoléfine chlorée ultérieurement, matière caractérisée en ce qu'elle contient les stabilisants suivants:

a) de 0,05 à 5% en poids d'un mono- ou bis-tétrazole de formule (I) selon la revendication 1, et
b) au moins 0,05% en poids d'un plastifiant époxydique et/ou de 0,05 à 5% en poids d'au moins un carboxylate ou d'un phénolate de baryum, de calcium, de zinc ou de cadmium,

à chaque fois par rapport à la matière thermoplastique chlorée.